(19) Europäisches Patentamt
European Patent Office
Office européen des brevets

(11) **EP 2 719 913 A1**

(12) **EUROPEAN PATENT APPLICATION**
published in accordance with Art. 153(4) EPC

(43) Date of publication:
**16.04.2014 Bulletin 2014/16**

(51) Int Cl.:
***F16D 48/02*** *(2006.01)*

(21) Application number: **11867196.5**

(22) Date of filing: **06.06.2011**

(86) International application number:
**PCT/JP2011/062949**

(87) International publication number:
**WO 2012/168994 (13.12.2012 Gazette 2012/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA**
**Toyota-shi, Aichi-ken, 471-8571 (JP)**

(72) Inventor: **KATO Masayuki**
**Toyota-shi**
**Aichi 471-8571 (JP)**

(74) Representative: **TBK**
**Bavariaring 4-6**
**80336 München (DE)**

(54) **AUTOMATIC CLUTCH CONTROL DEVICE**

(57) An automatic clutch control apparatus (ECU 100) includes an opening degree detection unit 101 to functionally detect an accelerator opening degree θ, a reference setting unit 103 to set a reference revolution NS that is an engine revolution Ne that outputs an engine torque Te required for a vehicle to advance based on the accelerator opening degree θ to be detected, a revolution detection unit 104 to detect the engine revolution, and a correction unit 109 to correct a clutch stroke St instructed to an automatic clutch 2 by correcting a torque characteristic curve in such a manner that a detection revolution Ne, which is the engine revolution Ne to be detected, is brought close to the reference revolution NS set by the reference setting unit 103. Thus, the clutch stroke St is corrected by correcting the torque characteristic curve in such a manner that the detection revolution Ne is brought close to the reference revolution NS, so that the torque characteristic curve is appropriately corrected.

FIG.5

**Description**

Technical Field

The present invention relates to an automatic clutch control apparatus for an automatic clutch that is configured to alternate between a coupling state and a decoupling state by changing a clutch stroke and transmit a torque between an engine and a transmission in the coupling state, so as to correct a torque characteristic curve showing a relation between the clutch stroke and the clutch torque when a vehicle advances.

Background Art

Conventionally, there has been known a vehicle equipped with an automatic clutch that is interposed between an engine and a transmission and alternates between a coupling state and a decoupling state by changing a clutch stroke so as to alternate between transmission and disconnection of a torque between the engine and the transmission. Also, with respect to the vehicle equipped with the automatic clutch, there have been proposed various control apparatuses, control methods, and the like in which a torque characteristic curve showing a relation between a clutch stroke and a clutch torque is corrected or learned, in order to realize an operation of the vehicle that a driver desires.
For example, there has been disclosed a clutch control apparatus in which the temperature of a clutch disc is assumed, and the clutch stroke is corrected based on the assumed temperature (see Patent Document 1). According to the clutch control apparatus described in Patent Document 1, the clutch torque desirably is controlled corresponding to thermal expansion of constitutional components of the clutch.

Related Art Document

Patent Document

Patent Document 1: Japanese Unexamined Patent Application Publication No. 2008-185217.

Summary of the Invention

Problems to be Solved by the Invention

However, with respect to the clutch control apparatus described in Patent Document 1, there has been the case where, when the assumed temperature of the clutch disc does not correspond with the actual temperature of the clutch disc, the desired clutch torque cannot be obtained.
For example, when the assumed temperature of the clutch disc is higher than the actual temperature of the clutch disc, the thermal expansion amount of the clutch disc is assumed larger than the actual thermal expansion amount of the clutch disc, which causes the actual clutch torque having a value lower than the desired clutch torque.
The present invention has been achieved in view of the above circumstances to solve the technical problems, and it is an object of the present invention to provide an automatic clutch control apparatus that appropriately corrects a torque characteristic curve. Means of Solving the Problems
In order to solve the problems described above, an automatic clutch control apparatus according to the present invention is configured as follows.
That is, according to one aspect of the present invention, an automatic clutch control apparatus may be such that an automatic clutch is configured to alternate between a coupling state and a decoupling state by changing a clutch stroke and transmit a torque between an engine and a transmission in the coupling state, so as to correct a torque characteristic curve showing a relation between the clutch stroke and the clutch torque when a vehicle advances, and the automatic clutch control apparatus includes an opening degree detection means for detecting at least one out of a throttle opening degree and an accelerator opening degree, a reference setting means for setting a reference revolution that is an engine revolution that outputs an engine torque required for the vehicle to advance, based on at least one out of the throttle opening degree and the accelerator opening degree detected by the opening degree detection means, a revolution detection means for detecting an engine revolution, and a correction means for correcting the clutch stroke instructed to the automatic clutch by correcting the torque characteristic curve in such a manner that the detection revolution that is the engine revolution detected by the revolution detection means is brought close to the reference revolution set by the reference setting means.
According to the automatic clutch control apparatus of the above-described configuration, at least one out of the throttle opening degree and the accelerator opening degree is detected, and the reference revolution that is the engine revolution that outputs the engine torque required for the vehicle to advance is set based on at least one out of the throttle opening degree and the accelerator opening degree to be detected. Then, the engine revolution is detected, and the clutch stroke instructed to the automatic clutch is corrected by correcting the torque characteristic curve in such a manner that the detection revolution that is the engine revolution to be detected is brought close to the reference revolution to be set, so that the torque characteristic curve is appropriately corrected.

That is, the setting of the reference revolution having an appropriate value leads to the setting of the engine revolution that outputs the engine torque required for the vehicle to advance as the reference revolution. In this case, the torque characteristic curve is corrected in such a manner that the detection revolution that is the engine revolution to be detected is brought close to the reference revolution to be set, and the torque characteristic curve is corrected to output the engine torque required for the vehicle to advance, so that the torque characteristic curve is appropriately corrected.

According to another aspect of the present invention, it is preferable that the automatic clutch control apparatus be such that the reference setting means sets the engine revolution that outputs the engine torque to accelerate the vehicle at a uniform acceleration corresponding to at least one out of the throttle opening degree and the accelerator opening degree detected by the opening degree detection means as the reference revolution in a period during which the automatic clutch operates from an engagement start point to a full engagement point.

According to the automatic clutch control apparatus of the above-described configuration, the engine revolution that outputs engine torque to accelerate the vehicle at the uniform acceleration corresponding to at least one out of the throttle opening degree and the accelerator opening degree to be detected is set as the reference revolution in the period during which the automatic clutch operates from the engagement start point to the full engagement point, so that the engine revolution having a more appropriate value is provided.

That is, when the vehicle advances, and the vehicle is accelerated at the uniform acceleration corresponding to at least one out of the throttle opening degree and the accelerator opening degree in the period during which the automatic clutch operates from the engagement start point to the full engagement point, the vehicle advances smoothly. Accordingly, thus, the engine revolution that outputs the engine torque to accelerate the vehicle at the uniform acceleration corresponding to at least one out of the throttle opening degree and the accelerator opening degree is set as the reference revolution, so that the engine revolution having a more appropriate value is set.

According to another aspect of the present invention, it is preferable that the automatic clutch control apparatus further include a revolution storing means for storing in advance the reference revolution corresponding to at least one out of the throttle opening degree and the accelerator opening degree, the revolution setting means sets the reference revolution by reading out, from the revolution storing means, the reference revolution corresponding to at least one out of the throttle opening degree and the accelerator opening degree detected by the opening degree detection means.

According to the automatic clutch control apparatus of the above-described configuration, the reference revolution is stored in the revolution storing means in advance, corresponding to at least one out of the throttle opening degree and the accelerator opening degree, and the reference revolution is set by reading out, from the revolution storing means, the reference revolution corresponding to at least one out of the throttle opening degree and the accelerator opening degree to be detected, so that appropriate reference revolution is set with a simple configuration.

According to another aspect of the present invention, it is preferable that the revolution setting means carries out at least one out of "delay processing" and "moderating processing" with respect to the reference revolution read out from the revolution storing means so as to set the reference revolution.

According to the automatic clutch control apparatus of the above-described configuration, at least one out of the "delay processing" and the "moderating processing" is carried out with respect to the reference revolution read out from the revolution storing means so as to set the reference revolution, so that the more appropriate reference revolution is set.

According to another aspect of the present invention, it is preferable that the automatic clutch control apparatus be such that the correction means corrects a position at the full engagement point on the torque characteristic curve in the stroke direction so as to correct the clutch stroke instructed to the automatic clutch.

According to the automatic clutch control apparatus of the above-described configuration, the position at the full engagement point on the torque characteristic curve is corrected in the stroke direction, which leads to the correction of the clutch stroke instructed to the automatic clutch, so that the clutch stroke is corrected with a simple configuration.

According to another aspect of the present invention, it is preferable that the automatic clutch control apparatus be such that, when the detection revolution is larger than the reference revolution, the correction means corrects the position at the full engagement point on the torque characteristic curve to a side to which the automatic clutch is coupled, and when the detection revolution is smaller than the reference revolution, the correction means corrects the position at the full engagement point on the torque characteristic curve to a side from which the automatic clutch is decoupled.

According to the automatic clutch control apparatus of the above-described configuration, when the detection revolution is larger than the reference revolution, the position at the full engagement point on the torque characteristic curve is corrected to the side to which the automatic clutch is coupled, and the detection revolution decreases so as to come close to the reference revolution, so that the clutch stroke is appropriately corrected. In contrast, when the detection revolution is smaller than the reference revolution, the position at the full engagement point on the torque characteristic curve is corrected to the side from which the automatic clutch is decoupled, and the detection revolution increases so as to come close to the reference revolution, so that the clutch stroke is appropriately corrected.

According to another aspect of the present invention, it is preferable that the automatic clutch control apparatus further include a correction amount calculation means for obtaining a correction amount of the clutch stroke instructed to the automatic clutch based on a difference that is subtraction of the reference revolution from the detection revolution, the correction means corrects the position at the full engagement point on the torque characteristic curve in the stroke direction only by the correction amount obtained by the correction amount calculation means.

According to the automatic clutch control apparatus of the above-described configuration, the correction amount of the clutch stroke instructed to the automatic clutch is obtained based on the difference that is the subtraction of the reference revolution from the detection revolution, and the position at the full engagement point on the torque characteristic curve is corrected in the stroke direction only by the correction amount to be obtained, so that the clutch stroke is more appropriately corrected. For example, as the magnitude of the absolute value of the difference that is the subtraction of the reference revolution from the detection revolution becomes larger, the magnitude of the absolute value the correction amount of the clutch stroke instructed to the automatic clutch is set larger, which provides the correction amount having an appropriate value.

According to another aspect of the present invention, it is preferable that the automatic clutch control apparatus further include a full engagement storing means for storing the position in the stroke direction at the full engagement point on the torque characteristic curve, an engagement determination means for determining whether the clutch stroke reaches the full engagement point, a learning determination means for determining whether the detection revolution corresponds with the reference revolution, and a learning execution means for re-writing the position in the stroke direction at the full engagement point stored in the full engagement storing means as the position in the stroke direction at the full engagement point on the torque characteristic curve corrected by the correction means when the engagement determination means determines that the clutch stroke has reached the full engagement point, and only when the learning determination means determines that the detection revolution corresponds with the reference revolution.

According to the automatic clutch control apparatus of the above-described configuration, the position in the stroke direction at the full engagement point on the torque characteristic curve is stored in the full engagement storing means, it is determined whether the clutch stroke reaches the full engagement point. Also, it is determined whether the detection revolution corresponds with the reference revolution. Then, when it is determined that the clutch stroke has reached the full engagement point, and only when it is determined that the detection revolution corresponds with the reference revolution, the position in the stroke direction at the full engagement point stored in the full engagement storing means is re-written as the position in the stroke direction at the full engagement point on the torque characteristic curve corrected by the correction means, so that the position in the stroke direction at the full engagement point on the torque characteristic curve is appropriately learned.

That is, when the clutch stroke reaches the full engagement point, the clutch is in a coupled state, and the engine revolution corresponds with an input shaft revolution of the transmission. Accordingly, when the clutch stroke has reached the full engagement point, and the detection revolution corresponds with the reference revolution, it is assumed that the clutch stroke has appropriately been corrected. By learning the position in the stroke direction at the full engagement point on the torque characteristic curve corrected (herein, by re-writing the position in the stroke direction at the full engagement point stored in the full engagement storing means), the position in the stroke direction at the full engagement point on the torque characteristic curve is appropriately learned.

According to another aspect of the present invention, it is preferable that the automatic clutch control apparatus be such that, when an output shaft revolution of the automatic clutch approximately corresponds with the detection revolution, the engagement determination means determines that the clutch stroke has reached the full engagement point.

According to the automatic clutch control apparatus of the above-described configuration, when the output shaft revolution of the automatic clutch approximately corresponds with the detection revolution, it is determined that the clutch stroke has reached the full engagement point. Accordingly, it is determined that the clutch stroke has reached the full engagement point, with a simple configuration.

According to another aspect of the present invention, it is preferable that the automatic clutch control apparatus be such that, when a state where an absolute value of a difference between the detection revolution and the reference revolution is equal to or less than a predetermined threshold value continues for a predetermined first period or longer, the learning determination means determines that the detection revolution corresponds with the reference revolution.

According to the automatic clutch control apparatus of the above-described configuration, when the state where the absolute value of the difference between the detection revolution and the reference revolution is equal to or less than the predetermined threshold value continues for the predetermined first period or longer, it is determined that the detection revolution corresponds with the reference revolution. Accordingly, it is appropriately determined that the detection revolution corresponds with the reference revolution.

According to another aspect of the present invention, it is preferable that the automatic clutch control apparatus be such that, only when a state where a variation amount per unit time of the detection revolution is equal to or less than a predetermined threshold value continues for a predetermined second period or longer, the learning determination means determines that the detection revolution corresponds with the reference revolution.

According to the automatic clutch control apparatus of the above-described configuration, only when a state where the variation amount per unit time of the detection revolution is equal to or less than the predetermined threshold value continues for the predetermined second period or longer, it is determined that the detection revolution corresponds with the reference revolution. Accordingly, it is more appropriately determined that the detection revolution corresponds with the reference revolution.

Effects of the Invention

According to the automatic clutch control apparatus of the present invention, at least one out of the throttle opening degree and the accelerator opening degree is detected, and the reference revolution that is the engine revolution that outputs the engine torque required for the vehicle to advance is set based on at least one out of the throttle opening degree and the accelerator opening degree to be detected. Then, the engine revolution is detected, and the clutch stroke instructed to the automatic clutch is corrected by correcting the torque characteristic curve in such a manner that the detection revolution that is the engine revolution to be detected is brought close to the reference revolution to be set, so that the torque characteristic curve is appropriately corrected.

Brief Description of the Drawings

[FIG. 1] FIG. 1 is a configuration diagram illustrating an example of a power train and a control system for the same of a vehicle to which the present invention is applied.
[FIG. 2] FIG. 2 is a cross-sectional view of a configuration of an automatic clutch according to an embodiment of the present invention.
[FIG. 3] FIG. 3 is a configuration diagram illustrating a gate mechanism and an actuator of a shift operation device according to an embodiment of the present invention.
[FIG. 4] FIG. 4 is a plane view of a shift gate of a shift device according to an embodiment of the present invention.
[FIG. 5] FIG. 5 is a functional configuration diagram illustrating a functional configuration of an ECU according to an embodiment of the present invention.
[FIG. 6] FIG. 6 is a graph illustrating a relationship between an accelerator opening degree and a reference revolution according to an embodiment of the present invention.
[FIG. 7] FIG. 7 is a graph illustrating a relationship between an engine revolution and an engine torque according to an embodiment of the present invention.
[FIG. 8] FIG. 8 is a graph illustrating a relationship between a correction amount of clutch stroke and a revolution difference that is the subtraction of the reference revolution from the detection revolution according to an embodiment of the present invention.
[FIG. 9] FIG. 9 is a graph illustrating correction of a torque characteristic curve in a case when the detection revolution is larger than the reference revolution according to an embodiment of the present invention.
[FIG. 10] FIG. 10 is a graph illustrating correction of the torque characteristic curve in a case when the detection revolution is smaller than the reference revolution according to an embodiment of the present invention.
[FIG. 11] FIG. 11 is a timing chart illustrating a timing when a learning flag is turned on according to an embodiment of the present invention.
[FIG. 12] FIG. 12 is a flowchart illustrating an operation of the ECU according to an embodiment of the present invention.
[FIG. 13] FIG. 13 is a flowchart illustrating an operation of a learning feasibility determination processing according to an embodiment of the present invention.
[FIG. 14] FIG. 14 is a timing chart illustrating an operation of the ECU according to an embodiment of the present invention.
[FIG. 15] FIG. 15 is a control block diagram illustrating a modification of a correction amount calculation unit according to an embodiment of the present invention.

Description of Embodiments

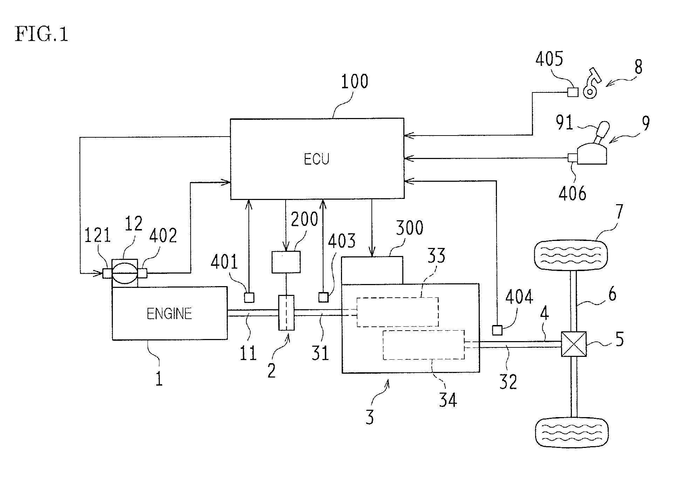

Hereinafter, embodiments of the present invention will be described referring to the drawings.
First, a power train of a vehicle according to the embodiments of the present invention will be described referring to FIG. 1. FIG. 1 is a configuration diagram illustrating an example of the power train and a control system for the same of the vehicle to which the present invention is applied. The control of the power train is executed by an ECU (Electronic Control Unit) 100 shown in FIG. 1. Specifically, the ECU 100 is constituted of, for example, an engine ECU, a transmission ECU, and an automatic clutch ECU, and these ECUs are connected so as to communicate with each other.

Also, as shown in FIG. 1, the power train of the vehicle according to the present embodiments includes an engine 1, an automatic clutch 2, a transmission 3, and the ECU 100. Hereinafter, the engine 1, the automatic clutch 2, a transmission 3, and the ECU 100 will be successively described.

-Engine 1-

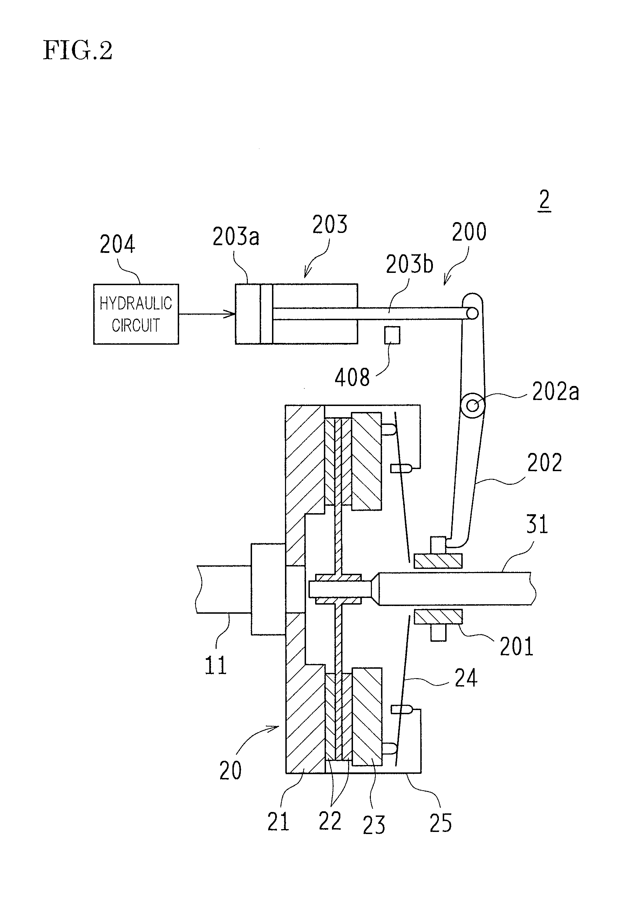

The engine 1 is an internal combustion engine such as a gasoline engine and a diesel engine. A crankshaft 11 serving as an output shaft of the engine 1 is linked to a flywheel 21 of the automatic clutch 2 (see FIG. 2). Also, the revolution of the crankshaft 11 (engine revolution Ne) is detected by an engine revolution sensor 401. Incidentally, the engine revolution sensor 401 corresponds to part of a revolution detection means described in Claims.

An air amount that is taken into the engine 1 is controlled by a throttle valve 12. The opening degrees of the throttle valve 12 (throttle opening degrees) are configured to be controlled by means of the ECU 100 without correlating with an accelerator pedal operation of a driver, and the throttle opening degrees are detected by a throttle opening degree sensor 402.

The throttle opening degrees of the throttle valve 12 is controlled by the ECU 100. Specifically, the ECU 100 controls the throttle opening degrees of the throttle valve 12 in order to introduce an appropriate intake air amount (target intake amount) in accordance with the operating states of the engine 1 such as the engine revolution Ne detected by the engine revolution sensor 401 and the amount of depressing of accelerator pedal (accelerator opening degrees) by a driver.

-Automatic Clutch 2-

The configuration of the automatic clutch 2 will be described referring to FIG. 2. FIG. 2 is a cross-sectional view of the configuration of the automatic clutch 2 according to an embodiment of the present invention. The automatic clutch 2 according to the present embodiments includes a dry single plate friction clutch 20 (hereafter simply referred to as "clutch 20") and a clutch operation device 200.

The clutch 20 includes a flywheel 21, a clutch disc 22, a pressure plate 23, a diaphragm spring 24, and a clutch cover 25. The flywheel 21 is linked to the crankshaft 11. Also, the clutch cover 25 is rotatably, integrally attached to the flywheel 21. The clutch disc 22 is disposed opposite to the flywheel 21 and splined to an input shaft 31 of the transmission 3 so as to be fixed.

The pressure plate 23 is disposed between the clutch disc 22 and the clutch cover 25. The pressure plate 23 is pressed against the flywheel 21 side by the outer peripheral portion of the diaphragm spring 24. The pressing force applied on the pressure plate 23 causes a friction force between the clutch disc 22 and the pressure plate 23 and between the flywheel 21 and the clutch disc 22. These friction forces put the clutch 20 into a coupled (engaged) state, so that the flywheel 21, the clutch disc 22, and the pressure plate 23 rotate integrally.

Thus, when the clutch 20 is in the coupled state, the crankshaft 11 and the input shaft 31 of the transmission 3 rotate integrally so as to transmit a torque between the engine 1 and the transmission 3. The maximum torque that can be transmitted via the clutch 20 between the engine 1 and the transmission 3 is referred to as "clutch torque Tc" in the following description. When the clutch 20 is fully coupled (engaged), and the engine 1 is in a drive state, the clutch torque Tc is set as a value larger than revolution torque (engine torque Te) of the crankshaft 11 in order to prevent the occurrence of the slippage in the clutch 20.

The clutch operation device 200 includes a release bearing 201, a release fork 202, and a hydraulic clutch actuator 203 and moves the pressure plate 23 of the clutch 20 in an axial direction (right-and-left direction in FIG. 2) so as to set the clutch disc 22 in a state where the clutch disc 22 is held between the pressure plate 23 and the flywheel 21 or in a state where the clutch disc 22 is separated between the pressure plate 23 and the flywheel 21.

The release bearing 201 is movably engaged with the input shaft 31 of the transmission 3 in the axial direction thereof (right-and-left direction in FIG. 2) and abutted on the center portion of the diaphragm spring 24. The release fork 202 is a member to transfer the release bearing 201 in the direction in which the release bearing 201 comes in contact with or detached from the flywheel 21 (right-and-left direction in FIG. 2). The clutch actuator 203 includes a cylinder including an oil chamber 203a and a piston rod 203b, and reciprocates the piston rod 203b (advances forward and backward) so as to rotate the release fork 202 about a fulcrum point 202a.

The actuation of the clutch actuator 203 is controlled by a hydraulic control circuit 204 and the ECU 100. Specifically, when the clutch actuator 203 in the state (clutch-coupled state) shown in FIG. 2 is driven so as to move the piston rod 203b forward (move to the right in FIG. 2), then the release fork 202 is rotated about the fulcrum point 202a (rotated in the clockwise direction in FIG. 2), and in accordance with this rotation, the release bearing 201 is moved toward the flywheel 21 side (left side in FIG. 2). Thus, with the movement of the release bearing 201, the central portion of the diaphragm spring 24 (that is, the portion of the diaphragm spring 24 that is abutted on the release bearing 201) is moved toward the flywheel 21 side (left side in FIG. 2), which causes the diaphragm spring 24 to be reversed. Accordingly, the pressing force of the pressure plate 23, which is applied by the diaphragm spring 24, becomes weak, so that the friction forces decrease between the clutch disc 22 and the pressure plate 23, and between the flywheel 21 and the clutch disc 22, which puts the clutch 20 in a decoupled (released) state.

Conversely, in the clutch-decoupled state, when the piston rod 203b of the clutch actuator 203 is moved backward (moved to the left in FIG. 2), the pressure plate 23 is pressed toward the flywheel 21 side (left side in FIG. 2) by the elastic force of the diaphragm spring 24. The pressing force of the diaphragm spring 24, which is applied to the pressure plate 23, causes an increase in friction force between the clutch disc 22 and the pressure plate 23, and between the flywheel 21 and the clutch disc 22, and these friction forces put the clutch 20 in a coupled (engaged) state.

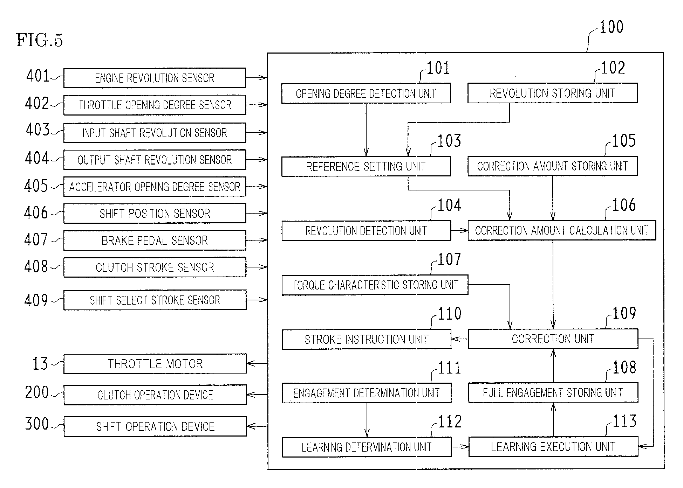

Also, the travel distance (hereinafter referred to as "clutch stroke St") of the piston rod 203b of the clutch actuator 203 is detected by a clutch stroke sensor 408. The output signal of the clutch stroke sensor 408 is inputted to the ECU 100 (see FIG. 5).

-Transmission 3-

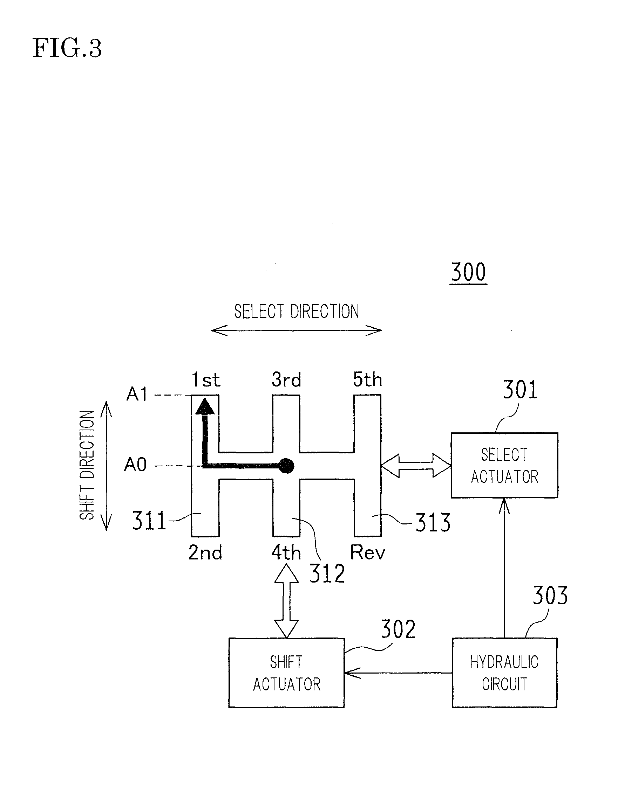

Next, the transmission 3 will be described referring to FIGs. 1 to 3. FIG. 3 is a configuration diagram illustrating a gate mechanism and an actuator of a shift operation device according to an embodiment of the present invention. For example, the transmission 3 has a configuration similar to that of a common manual transmission such as a parallel gear type transmission having five forward shift stages and one backward shift stage. The input shaft 31 of the transmission 3 is coupled to the clutch disc 22 of the clutch 20 (see FIG. 2).

Also, as shown in FIG. 1, the transmission 3 includes an input side gear group 33 and an output side gear group 34. The input side gear group 33 is coupled to the input shaft 31, and the output side gear group 34 is coupled to an output shaft 32. Also, according to a shift operation device 300 described later, any one of gears in the input side gear group 33 is engaged with any one of gears in the output side gear group 34, so as to select a gear stage in accordance with the engaged gears. Further, the revolution torque of the output shaft 32 of the transmission 3 is transmitted to drive wheels 7 through a drive shaft 4, a differential gear 5, a shaft 6, and the like.

The revolution of the input shaft 31 of the transmission 3 (the output side revolution of the clutch 20: hereinafter referred to as "clutch revolution Nc") is detected by an input shaft revolution sensor 403. Also, the revolution of the output shaft 32 of the transmission 3 is detected by an output shaft revolution sensor 404. Based on a ratio of the revolution (output revolution/input revolution) obtained from output signals of the input shaft revolution sensor 403 and the output shaft revolution sensor 404, a current gear stage of the transmission 3 is determined.

In the transmission 3 according to the present embodiments, there is provided the shift operation device 300 including a shift fork, a select-and-shift shaft, collectively constituting an automated manual transmission (AMT: Automatic Manual Transmission) in which a gear shift operation is automatically carried out.

As shown in FIG. 3, the shift operation device 300 includes a hydraulic select actuator 301 to carry out an operation in the select direction (select operation), a hydraulic shift actuator 302 to carry out an operation in the shift direction (shift operation), and a hydraulic circuit 303 to control the hydraulic pressure of hydraulic oil to be supplied to the actuators 301 and 302.

In the shift operation device 300, a plurality of gates including shift positions to define a gear stage are arranged along the select direction. Specifically, for example, as shown in FIG. 3, a first gate 311 to define a first speed (1st) and a second speed (2nd), a second gate 312 to define a third speed (3rd) and a fourth speed (4th), and a third gate 313 to define a fifth speed (5th) and a reverse (Rev) are arranged along the select direction.

When any one of the gates (for example, the first gate 311), out of the first gate 311 to the third gate 313, is selected according to the drive of the select actuator 301, and the shift actuator 302 is driven, the switching of gear stages is carried out (for example, from neutral position (N) to the first speed (1st)).

In the hydraulic circuit 303, a solenoid valve to activate a valve body upon the energization of an excitation coil, and the like are provided. When the excitation coil disposed in the solenoid valve is energized and unenergized, the supply of oil pressure or the release of the oil pressure provided for the select actuator 301 and the shift actuator 302 is controlled.

Also, a solenoid control signal (hydraulic designating value) from the ECU 100 is inputted to the hydraulic circuit 303 of the shift operation device 300. The hydraulic circuit 303 separately drivingly controls the select actuator 301 and the shift actuator 302 based on the solenoid control signal inputted from the ECU 100. As a result, the select operation and the shift operation of the transmission 3 are executed. Also, the select operation amount and the shift operation amount are detected by a shift select stroke sensor 409 (see FIG. 5).

-Shift Device 9-

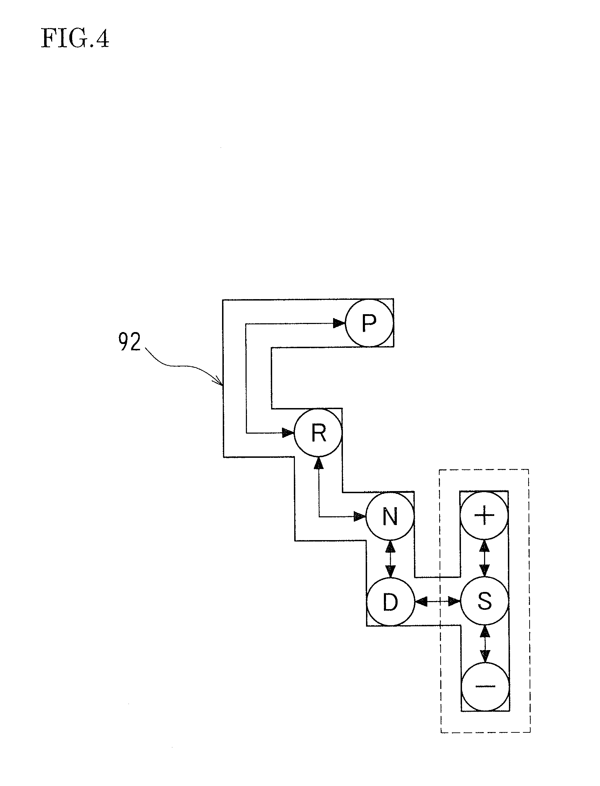

Next, a shift device 9 will be described referring to FIGs. 1 and 4. FIG. 4 is a plan view of a shift gate 92 of the shift device 9 according to an embodiment of the present invention. On the other hand, as shown in FIG. 1, the shift device 9 is disposed adjacent to a driver seat of the vehicle. A shift lever 91 is movably operably provided for the shift device 9.

Also, as shown in FIG. 4, there is formed the shift gate 92 in the shift device 9 including a parking position (P), a reverse position (R), a neutral position (N), a drive position (D), and a sequential position (S), having a configuration which allows a driver to move the shift lever 91 to a shift position that the driver desires (see FIG. 1). Each shift position such as the parking position (P), the reverse position (R), the neutral position (N), the drive position (D), and the sequential position (S) (including "+" position and "-" position described later) is detected by a shift position sensor 406 (see FIG. 5).

For example, when the shift lever 91 is operated to "the drive position (D)" of the shift gate 92, a plurality of forward gear stages (forward five speeds) of the transmission 3 are automatically shift-controlled in accordance with driving states of the vehicle. That is, the shift operation is carried out in an automatic mode.

In contrast, when the shift lever 91 is operated to "the sequential position (S)" of the shift gate 92, and the shift lever 91 is operated to "+" position and "-" position with respect to the position (S) of the shift gate 92 as a neutral position, the forward gear stages of the transmission 3 are upshifted or downshifted. Specifically, every time the shift lever 91 is operated to the "+" position of the shift gate 92, the gear stage is upshifted on a one-by-one basis (for example, 1st → 2nd → ... → 5th). On the other hand, every time the shift lever 91 is operated to the "-" position of the shift gate 92, the gear stage is downshifted on the one-by-one basis (for example, 5th → 4th → ... → 1st).

-Configuration of ECU 100-

Next, the configuration of the ECU 100 will be described referring to FIGs. 1 and 5. FIG. 5 is a functional configuration diagram illustrating a functional configuration of the ECU 100 according to an embodiment of the present invention. The ECU 100 includes a CPU (Central Processing Unit), a ROM (Read Only Memory), a RAM (Random Access Memory), a backup RAM, and an EEPROM (Electrically Erasable Programmable Read-Only Memory) to control a throttle motor 121, a clutch operation device 200, the shift operation device 300, and the like.

The ROM stores various control programs, table data (or map data), and the like to be referred to when executing those various control programs. The CPU reads out and executes the various control programs stored in the ROM so as to carry out various processes. The RAM is a memory that temporarily stores results of arithmetic operations with the CPU and data inputted from each of the sensors, and the like. The backup RAM is a nonvolatile memory that stores data that need storing, and the like, for example, when the engine 1 is stopped. The EEPROM is a re-writable nonvolatile memory that stores information and the like, on coordinates of a position P in the stroke direction at a full engagement point on a torque characteristic curve described later.

The ECU 100 is connected to the engine revolution sensor 401, the throttle opening degree sensor 402, the input shaft revolution sensor 403, the output shaft revolution sensor 404, an accelerator opening degree sensor 405 to detect the opening degree of the accelerator pedal 8, a shift position sensor 406 to detect the shift position of the shift device 9, a brake pedal sensor 407 to detect a depressing amount of the brake pedal, the clutch stroke sensor 408 to detect the clutch stroke St of the automatic clutch 2, the shift select stroke sensor 409, and the like, and the signals from each of these sensors are inputted to the ECU 100. Incidentally, the accelerator opening degree sensor 405 corresponds to part of an opening degree detection means described in Claims.

Also, the ECU 100 is connected to a throttle motor 13 that opens and closes the throttle valve 12, the clutch operation device 200 of the automatic clutch 2, the shift operation device 300 of the transmission 3, and the like as a control target.

The ECU 100 executes various kinds of control of the engine 1, including the opening degree control of the throttle valve 12 of the engine 1 based on the output signals of the above-described various sensors. Also, the ECU 100 outputs a control signal to the clutch operation device 200 of the automatic clutch 2 at the time of shifting in the transmission 3, and the like so as to let the clutch 2 execute coupling and decoupling operations. Further, the ECU 100 outputs a control signal (oil pressure designating value) to the shift operation device 300 of the transmission 3 based on the output signals of the above-described various sensors so as to execute the shift control to change the gear stages of the transmission 3.

Also, in the ECU 100, the CPU reads out and executes control programs stored in the ROM so as to classifiably function as an opening degree detection unit 101, a revolution storing unit 102, a reference setting unit 103, a revolution detection unit 104, a correction amount storing unit 105, a correction amount calculation unit 106, a torque characteristic storing unit 107, a full engagement storing unit 108, a correction unit 109, a stroke instruction unit 110, an engagement determination unit 111, a learning determination unit 112, and a learning execution unit 113. It is noted that the automatic clutch control apparatus according to the present invention includes the opening degree detection unit 101, the revolution storing unit 102, the reference setting unit 103, the revolution detection unit 104, the correction amount storing unit 105, the correction amount calculation unit 106, the torque characteristic storing unit 107, the full engagement storing unit 108, the correction unit 109, the stroke instruction unit 110, the engagement determination unit 111, the learning determination unit 112, and the learning execution unit 113.

The opening degree detection unit 101 serves as a function unit to detect an accelerator opening degree $\theta$ (%), which indicates the opening degree of the accelerator pedal 8, via the accelerator opening degree sensor 405. Incidentally, the opening degree detection unit 101 corresponds to part of an opening degree detection means described in Claims.

The revolution storing unit 102 serves as a function unit to store in advance reference revolution NS1 that is engine revolution Ne that outputs the engine torque Te required for the vehicle to advance in accordance with the accelerator opening degree $\theta$. Incidentally, the revolution storing unit 102 corresponds to a revolution storing means described in Claims. Also, the revolution storing unit 102 stores the engine revolution Ne that outputs the engine torque Te by which the vehicle is accelerated at a constant acceleration $\alpha(\theta)$ in accordance with the accelerator opening degree $\theta$, as the reference revolution NS1, in a period during which the automatic clutch 2 operates from an engagement start point to a full engagement point. Specifically, for example, the revolution storing unit 102 is realized as tables (or maps) stored in the ROM and the like in the ECU 100.

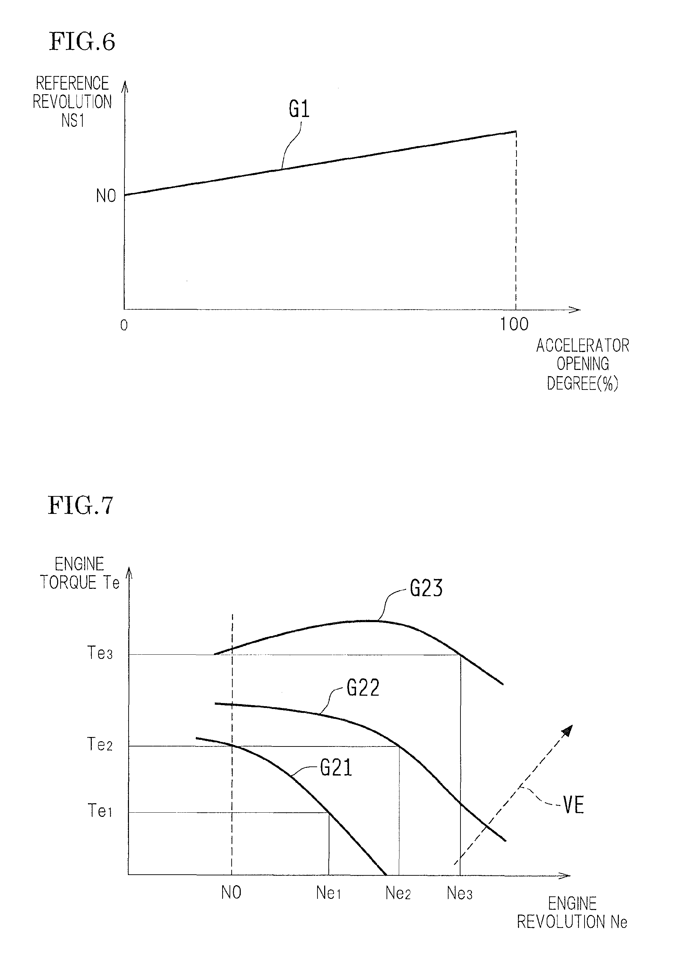

In other words, the reference revolution NS1 is a target value of the engine revolution Ne to accelerate the vehicle at the constant acceleration $\alpha(\theta)$ in accordance with the accelerator opening degree $\theta$ in the period during which the automatic clutch 2 operates from the engagement start point to the full engagement point. That is, the larger the accelerator opening degree $\theta$ is, the larger the acceleration $\alpha(\theta)$ becomes. Also, the larger the acceleration $\alpha(\theta)$ is, the larger the clutch torque Tc and the engine torque Te become, which leads to a large value in terms of the reference revolution NS1. Accordingly, the larger the accelerator opening degree $\theta$ is, the larger the reference revolution NS1 is set, as described later referring to FIG. 6.

The reference setting unit 103 serves as a function unit to set the reference revolution NS that is the engine revolution Ne that outputs the engine torque Te required for the vehicle to advance based on the accelerator opening degree $\theta$ detected by the opening degree detection unit 101. Incidentally, the reference setting unit 103 corresponds to a reference setting means described in Claims. Specifically, the reference setting unit 103 reads out the reference revolution NS1 in accordance with the accelerator opening degree $\theta$ detected by the opening degree detection unit 101 from the revolution storing unit 102 and carries out "delay processing" in which a time delay is provided and "moderating processing" in which variation is moderated, for the reference revolution NS 1 to be read out, so as to set the reference revolution NS.

For example, "delay processing" is processing in which output is delayed only by a predetermined delay time TB (for example, 100 msec). Also, for example, "moderating processing" is such that the reference revolution NS is obtained from the reference revolution NS1 read out from the revolution storing unit 102 based on the following formula (1) so as to set the reference revolution NS.

$$\text{NS}(n) = \alpha \times \text{NS1}(n) + (1 - \alpha) \times \text{NS1}(n - 1) \qquad (1)$$

Incidentally, (n) means a value of the reference revolution obtained through this processing, and (n - 1) means a value of the reference revolution obtained through the previous processing. The constant $\alpha$ is a value that is larger than "0" and less than "1" (for example, 0.5). It is noted that the effect of moderating the variation in the reference revolution NS is remarkable in proportion to the small magnitude of the constant $\alpha$. Also, it is preferable that the delay time TB and the constant $\alpha$ be appropriately set in accordance with variation delay of the engine revolution Ne with respect to variation in the accelerator opening degree $\theta$ of the vehicle, and the like.

Thus, the reference revolution NS is set in a manner that the reference revolution NS in accordance with the accelerator opening degree $\theta$ to be detected is read out from the revolution storing unit 102, so that the appropriate reference revolution NS is set with a simple configuration.

In the present embodiment, the case will be described where the reference setting unit 103 reads out the reference revolution NS1 in accordance with the accelerator opening degree $\theta$ from the revolution storing unit 102 so as to set the reference revolution NS. However, a mode may be applied that the reference setting unit 103 sets the reference revolution NS based on the accelerator opening degree $\theta$ by another method. For example, a mode may be applied that the reference setting unit 103 obtains the reference revolution NS 1 according to a formula in which the reference revolution NS 1 is obtained from the accelerator opening degree $\theta$, so as to set the reference revolution NS.

Also, in the present embodiment, the case is described where the reference setting unit 103 sets the reference revolution NS1 based on the accelerator opening degree $\theta$. However, a mode may be applied that the reference setting unit 103 sets the reference revolution NS1 based on at least any one of the throttle opening degree and the accelerator opening degree $\theta$. For example, a mode may be applied that the reference setting unit 103 sets the reference revolution NS1 based on the throttle opening degree detected by the throttle opening degree sensor 402.

Also, in the period during which the automatic clutch 2 operates from the engagement start point to the full engagement point, the engine revolution Ne that outputs the engine torque Te to accelerate the vehicle at the constant acceleration $\alpha(\theta)$ in accordance with the accelerator opening degree $\theta$ is set as the reference revolution NS1, so that the reference revolution NS is set to an appropriate value.

That is, when the vehicle starts moving, and the vehicle is accelerated at the constant acceleration $\alpha(\theta)$ in accordance with the accelerator opening degree $\theta$ in the period during which the automatic clutch 2 operates from the engagement start point to the full engagement point, the vehicle advances smoothly. Accordingly, the engine revolution Ne that outputs the engine torque Te to accelerate the vehicle at the constant acceleration $\alpha(\theta)$ in accordance with the accelerator opening degree $\theta$ is set as the reference revolution NS1, so that the reference revolution NS is set to an appropriate value.

In the present embodiment, the case is described where the reference setting unit 103 sets the engine revolution Ne that outputs the engine torque Te to accelerate the vehicle at the predetermined constant acceleration $\alpha 0$ set as the reference revolution NS in the period during which the automatic clutch 2 operates from the engagement start point to the full engagement point. However, a mode may be applied that the reference setting unit 103 sets the reference revolution NS 1 that is the engine revolution Ne that outputs the engine torque Te required for the vehicle to advance. For example, a mode may be applied that the reference setting unit 103 sets the engine revolution Ne that outputs the engine torque Te to accelerate the vehicle at the acceleration that is gradually increased, as the reference revolution NS1, in the period during which the automatic clutch 2 operates from the engagement start point to the full engagement point. In this case when the automatic clutch 2 reaches the engagement start point, that is, the acceleration is low at the start of advancing, which allows the vehicle to advance more smoothly.

Also, the reference setting unit 103 carries out the delay processing and the moderating processing for the reference revolution NS1 read out from the revolution storing unit 102 to set the reference revolution NS, so that the more appropriate reference revolution NS is set.

In addition, in the present embodiment, the case is described where the reference setting unit 103 carries out the delay processing and the moderating processing for the reference revolution NS1 read out from the revolution storing unit 102 to set the reference revolution NS. However, a mode may be applied that the reference setting unit 103 carries out at least any one of the delay processing and the moderating processing for the reference revolution NS read out from the revolution storing unit 102 to set the reference revolution NS.

Also, in the present embodiment, the case has been described where the reference setting unit 103 carries out moving average processing as "moderating processing". However, a mode may be applied that the reference setting unit 103 carries out another type of processing (for example, low pass filter processing) as "moderating processing".

FIG. 6 is a graph illustrating a relationship between the accelerator opening degree $\theta$ and the reference revolution NS 1 according to an embodiment of the present invention. In FIG. 6, the horizontal axis represents the accelerator opening degree $\theta$ (%), and the vertical axis represents the reference revolution NS 1. As shown in Graph G1 of FIG. 6, the reference revolution NS1 is set larger in proportion to the magnitude of the accelerator opening degree $\theta$. It is noted that when the accelerator opening degree $\theta$ is "0 %", the reference revolution NS1 is idling revolution N0 of the engine 1. In FIG. 6, although the Graph G1 is described as a straight line upwardly to the right, the relationship between the accelerator opening degree $\theta$ and the reference revolution NS1 may be obtained in accordance with the characteristics of the engine 1, and the like based on a simulation, an experiment, and the like while referring to the acceleration $\alpha$, the clutch torque Tc, and the engine torque Te.

FIG. 7 is a graph illustrating a relationship between the engine revolution Ne and the engine torque Te according to an embodiment of the present invention. In FIG. 7, the horizontal axis represents the engine revolution Ne, and the vertical axis represents the engine torque Te. Graphs G21, G22, and G23 of FIG. 7 are graphs illustrating a relationship between the engine revolution Ne and the engine torque Te while the accelerator opening degree $\theta$ is constant. The accelerator opening degrees $\theta$ corresponding to the Graphs G21, G22, and G23 are described as accelerator opening degrees $\theta 1$, $\theta 2$, and $\theta 3$. When accelerator opening degree $\theta$ increases in the order of the accelerator opening degrees $\theta 1$, $\theta 2$, and $\theta 3$ (herein, $\theta 1 < \theta 2 < \theta 3$), as shown in the Graphs G21, G22, and G23, the graph showing the relationship between the engine revolution Ne and the engine torque Te parallelly moves in general in the direction shown in an arrow VE (upwardly to the right).

With respect to the Graph G21 having the accelerator opening degree $\theta 1$, when the engine revolution Ne is the engine revolution Ne1, the engine torque Te is the engine torque Te1. Also, with respect to the Graph G22 having the accelerator opening degree $\theta 2$, when the engine revolution Ne is the engine revolution Ne2, the engine torque Te is the engine torque Te2. Further, with respect to the Graph G23 having the accelerator opening degree $\theta 3$, when the engine revolution Ne is the engine revolution Ne3, the engine torque Te is the engine torque Te3. Thus, the engine torque Te is determined in accordance with the accelerator opening degree $\theta$ and the engine revolution Ne.

Returning to FIG. 5 again, the functional configuration of the ECU 100 will be described. The revolution detection unit 104 serves as a function unit to detect the engine revolution Ne via the engine revolution sensor 401. Incidentally, the revolution detection unit 104 corresponds to part of a revolution detection means described in Claims.

The correction amount storing unit 105 serves as a function unit to store in advance a relationship between a revolution difference ΔN that is the subtraction of the reference revolution NS from the engine revolution Ne detected by the revolution detection unit 104, and a correction amount ΔS of the clutch stroke St instructed to the automatic clutch 2. Incidentally, the correction amount storing unit 105 corresponds to part of a correction amount calculation means described in Claims. Specifically, for example, the correction amount storing unit 105 is realized as tables (or maps) stored in the ROM and the like in the ECU 100.

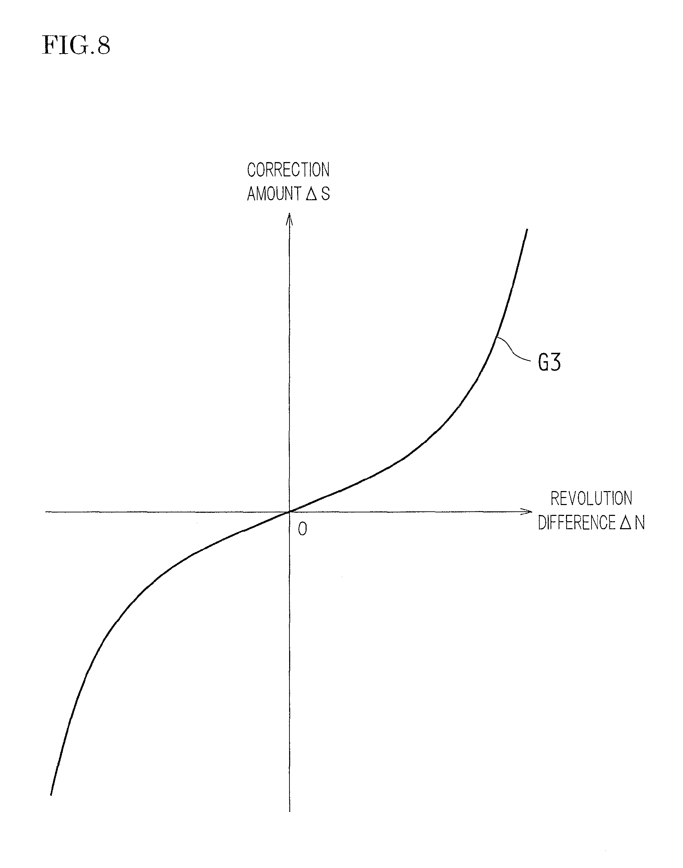

FIG. 8 is a graph illustrating a relationship between the revolution difference ΔN and the correction amount ΔS that are stored in the correction amount storing unit 105 according to an embodiment of the present invention. In FIG. 8, the horizontal axis represents the revolution difference ΔN, and the vertical axis represents the correction amount ΔS. As shown in Graph G3 of FIG. 8, the larger the absolute value of the revolution difference ΔN is, the larger the absolute value of the correction amount ΔS becomes, which is point symmetry in terms of the origin of the coordinate axes. In FIG. 8, although the Graph G3 is a curved line upwardly to the right, the relationship between the revolution difference ΔN and the correction amount ΔS may be obtained in accordance with the characteristics of the engine 1 and the like based on a simulation, an experiment, and the like.

Returning to FIG. 5 again, the functional configuration of the ECU 100 will be described. The correction amount calculation unit 106 serves as a function unit to obtain the correction amount ΔS of the clutch stroke St instructed to the automatic clutch 2 based on the revolution difference ΔN that is subtraction of the reference revolution NS from the engine revolution Ne detected by the revolution detection unit 104. Incidentally, the correction amount calculation unit 106 corresponds to part of a correction amount calculation means described in Claims. Specifically, the correction amount calculation unit 106 reads out the correction amount ΔS of the clutch stroke St instructed to the automatic clutch 2 corresponding to the revolution difference ΔN that is the subtraction of the reference revolution NS from the engine revolution Ne detected by the revolution detection unit 104, from the correction amount storing unit 105 so as to set the correction amount ΔS.

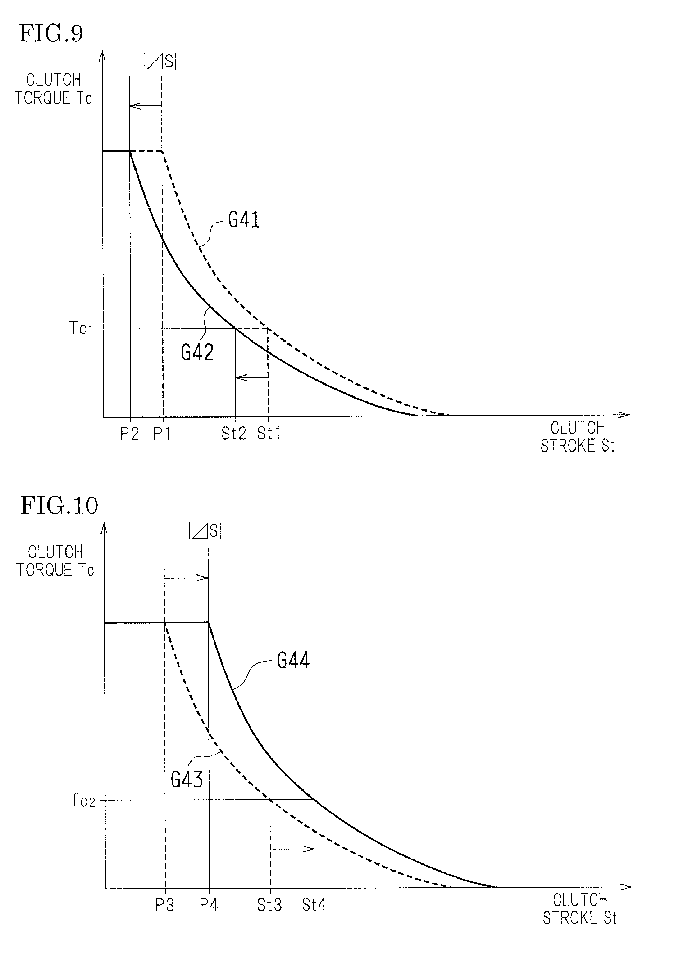

The torque characteristic storing unit 107 serves as a function unit to store in advance a torque characteristic curve (see FIGs. 9 and 10) showing a relationship between the clutch stroke St and the clutch torque Tc. Specifically, for example, the torque characteristic storing unit 107 is realized as tables (or maps) stored in the ROM and the like in the ECU 100.

The full engagement storing unit 108 serves as a function unit to store information on coordinates of the position P in the stroke direction at the full engagement point on the torque characteristic curve (see FIGs. 9 and 10). Incidentally, the full engagement storing unit 108 corresponds to a full engagement storing means described in Claims. Specifically, for example, the full engagement storing unit 108 is realized by the EEPROM and the like in the ECU 100. The information on the coordinates of the position P in the stroke direction at the full engagement point on the torque characteristic curve stored in the full engagement storing unit 108 (see FIGs. 9 and 10) is re-written by the learning execution unit 113.

The correction unit 109 serves as a function unit to correct the clutch stroke St instructed to the automatic clutch 2 by correcting the torque characteristic curve in such a manner that the engine revolution Ne detected by the revolution detection unit 104 (hereinafter referred to as "detection revolution Ne") is brought close to the reference revolution NS set by the reference setting unit 103. Incidentally, the correction unit 109 corresponds to a correction means described in Claims.

Specifically, the correction unit 109 corrects the clutch stroke St instructed to the automatic clutch 2 by correcting the position P at the full engagement point on the torque characteristic curve in the stroke direction. More specifically, when the detection revolution Ne is larger than the reference revolution NS (that is, when the revolution difference ΔN is positive), the correction unit 109 corrects the position P at the full engagement point on the torque characteristic curve to the side to which the automatic clutch 2 is coupled. When the detection revolution Ne is smaller than the reference revolution NS (that is, when the revolution difference ΔN is negative), the correction unit 109 corrects the position P at the full engagement point on the torque characteristic curve to the side from which the automatic clutch 2 is decoupled. Also, the correction unit 109 corrects the position P at the full engagement point on the torque characteristic curve only by the absolute value of the correction amount ΔS obtained by the correction amount calculation unit 106 in the stroke direction.

FIGs. 9 and 10 are graphs illustrating correction of the torque characteristic curve. In FIGs. 9 and 10, the horizontal axis represents the clutch stroke St, and the vertical axis represents the clutch torque Tc. Also, FIG. 9 is one example where the revolution difference ΔN is positive, and FIG. 10 is one example where the revolution difference ΔN is negative.

First, the case of FIG. 9 where the revolution difference ΔN is positive will be described. Graph G41 is a graph illustrating the torque characteristic curve before correction. Graph G42 is a graph illustrating the torque characteristic curve after correction. In this case, the correction unit 109 parallelly moves the torque characteristic curve shown in the Graph G41 only by the absolute value of the correction amount ΔS in the stroke direction. That is, the correction unit 109 corrects a position P1 at the full engagement point on the torque characteristic curve shown in the Graph G41 down to a position P2 at the full engagement point on the torque characteristic curve shown in the Graph G42. As a result, the clutch stroke St corresponding to the clutch torque Tc1 is corrected from the clutch stroke St1 to the clutch stroke St2, to the side to which the automatic clutch 2 is coupled.

Next, the case of FIG. 10 where the revolution difference $\Delta N$ is negative will be described. Graph G43 is a graph illustrating the torque characteristic curve before correction. Graph G44 is a graph illustrating the torque characteristic curve after correction. In this case, the correction unit 109 parallelly moves the torque characteristic curve shown in the Graph G43 only by the absolute value of the correction amount $\Delta S$ in the stroke direction. That is, the correction unit 109 corrects a position P3 at the full engagement point on the torque characteristic curve shown in the Graph G43 up to a position P4 at the full engagement point on the torque characteristic curve shown in the Graph G44. As a result, the clutch stroke St corresponding to the clutch torque Tc2 is corrected from the clutch stroke St3 to the clutch stroke St4, to the side from which the automatic clutch 2 is decoupled.

Thus, the position P at the full engagement point on the torque characteristic curve is corrected in the stroke direction, which corrects the clutch stroke St instructed to the automatic clutch 2, so that the clutch stroke is corrected with a simple configuration.

Also, as shown in FIG. 9, when the detection revolution Ne is larger than the reference revolution NS, the position P1 at the full engagement point on the torque characteristic curve is corrected to the side to which the automatic clutch 2 is coupled (the left side of FIG. 9), the detection revolution Ne decreases and is brought close to the reference revolution NS, which appropriately corrects the clutch stroke St. In contrast, as shown in FIG. 10, when the detection revolution Ne is smaller than the reference revolution NS, the position P3 at the full engagement point on the torque characteristic curve is corrected to the side from which the automatic clutch 2 is decoupled (the right side of FIG. 10), the detection revolution Ne increases and is brought close to the reference revolution NS, which appropriately corrects the clutch stroke St.

Further, the correction amount $\Delta S$ of the clutch stroke St instructed to the automatic clutch 2 is obtained by the correction amount calculation unit 106 based on the revolution difference $\Delta N$ that is the subtraction of the reference revolution NS from the detection revolution Ne, and the position P at the full engagement point on the torque characteristic curve is corrected by the correction unit 109 only by the absolute value of the correction amount $\Delta S$ to be obtained in the stroke direction (the right-and-left direction in FIGs. 9 and 10), so that the clutch stroke St is more appropriately corrected.

In the present embodiment, as has been described referring to FIG. 8, the case has been described where the correction amount $\Delta S$ has a positive value or a negative value in accordance with the revolution difference $\Delta N$ having a positive and negative value. However, a mode may be applied that the correction amount $\Delta S$ to be obtained is equal to or higher than "0". In this case, the correction unit 109 may correct the position P at the full engagement point on the torque characteristic curve only by the correction amount $\Delta S$ obtained by the correction amount calculation unit 106 in the stroke direction (the right-and-left direction in FIG. 9).

The stroke instruction unit 110 serves as a function unit to obtain the clutch stroke St based on the torque characteristic curve corrected by the correction unit 109 and instructs the clutch stroke St to the automatic clutch 2. Specifically, the stroke instruction unit 110 obtains the clutch stroke St in the following procedures and instructs the clutch stroke St to the automatic clutch 2. First, the stroke instruction unit 110 changes the clutch stroke St at a constant speed from a time when the accelerator pedal 8 is depressed to the engagement start point.

The engine torque Te is assumed based on the engine revolution Ne detected by the revolution detection unit 104 in a period ranging from the arrival at the engagement start point to the arrival at the full engagement point. That is, the engine torque Te corresponding to the accelerator opening degree $\theta$ and the engine revolution Ne is obtained, referring to the graphs shown in FIG. 7. Then, the clutch stroke St is obtained based on the torque characteristic curve corrected by the correction unit 109 in such a manner that the engine torque Te to be obtained corresponds with the clutch torque Tc. In addition, after reaching the full engagement point, the clutch stroke St is changed up to the stroke end position at the constant speed.

The engagement determination unit 111 serves as a function unit to determine whether the clutch stroke St reaches the full engagement point. Incidentally, the engagement determination unit 111 corresponds to an engagement determination means described in Claims. Specifically, when the output shaft revolution of the automatic clutch 2 (herein, input shaft revolution Ni detected by the input shaft revolution sensor 403) has approximately corresponded with the detection revolution Ne, the engagement determination unit 111 determines that the clutch stroke St has reached the full engagement point. Incidentally, for example, "approximately corresponded with" means that the revolution difference that is the subtraction of the input shaft revolution Ni from the detection revolution Ne is equal to or less than 50 rpm.

Thus, when the output shaft revolution of the automatic clutch 2 (herein, input shaft revolution Ni detected by the input shaft revolution sensor 403) has approximately corresponded with the detection revolution Ne, it is determined that the clutch stroke St has reached the full engagement point. Accordingly, it is determined that the clutch stroke St has reached the full engagement point, with a simple configuration.

The learning determination unit 112 serves as a function unit to determine whether the detection revolution Ne corresponds with the reference revolution NS, and turn on a learning flag indicating that the position P at the full engagement point on the torque characteristic curve can be learned in the case when it is determined that the detection revolution Ne corresponds with the reference revolution NS. Incidentally, the learning determination unit 112 corresponds to a learning determination means described in Claims.

Specifically, when a state where the absolute value of the revolution difference $\Delta N$ between the detection revolution Ne and the reference revolution NS is equal to or less than a predetermined threshold value $\Delta Nth$ (for example, 30 rpm) continues for a predetermined first period TMth (for example, 100 msec) or longer, and a state where the variation amount $\Delta Ne$ per unit time $\Delta t$ (for example, 20 msec) of the detection revolution Ne is equal to or less than a predetermined threshold value $\Delta Neth$ (for example, 10 rpm) continues for a predetermined second period (for example, 100 msec) or longer, the learning determination unit 112 determines that the detection revolution Ne corresponds with the reference revolution NS.

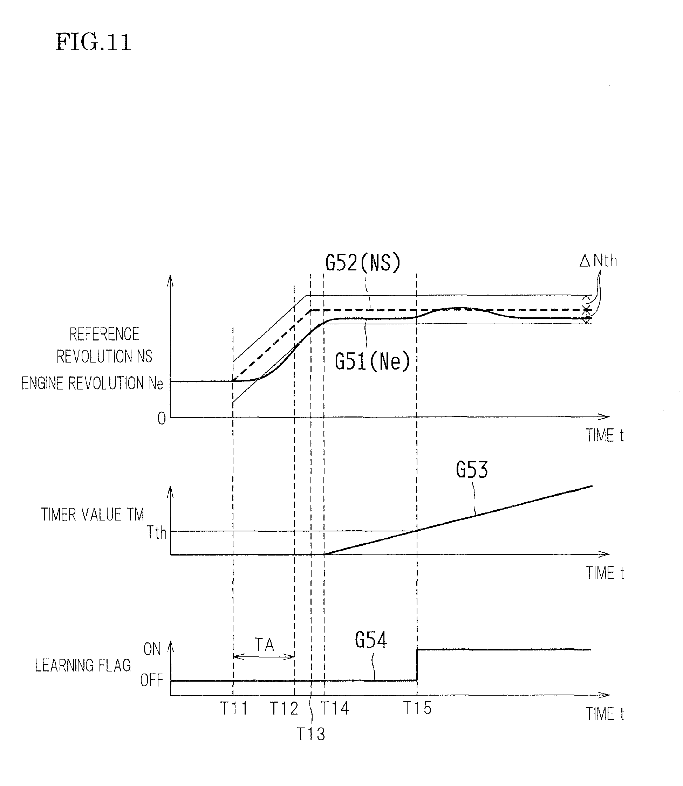

FIG. 11 is a timing chart illustrating a timing when the learning flag is turned on according to an embodiment of the present invention. In FIG. 11, all the horizontal axes of the graphs represent a time t, and in the order beginning at the top, Graph G52 (dashed line) showing the variation in the reference revolution NS, Graph G51 (solid line) showing the variation in the engine revolution Ne, Graph G53 showing the variation in a timer value TM, and Graph G54 showing the timing of turning on the learning flag are shown. Incidentally, the timer value TM is a timer value to count an elapsed period of time with regard to a state where the absolute value of the revolution difference $\Delta N$ between the detection revolution Ne and the reference revolution NS is equal to or less than the predetermined threshold value $\Delta Nth$. For convenience sake, the description will be omitted regarding determination on whether a state where the variation amount per unit time of the detection revolution Ne is equal to or less than a predetermined threshold value $\Delta Neth$ continues for a predetermined second period or longer.

At a time T11 of FIG. 11, the accelerator pedal 8 is depressed, and the accelerator opening degree $\theta$ starts increasing, and accordingly, the reference revolution NS increases as shown in the Graph G52. The learning determination unit 112 starts determining whether the detection revolution Ne corresponds with the reference revolution NS at a time T12 when a predetermined period TA (for example, 500 msec) has passed from the time T11. At a time T13, the accelerator opening degree $\theta$ stops increasing (the accelerator opening degree $\theta$ becomes uniform), and accordingly, the reference revolution NS stops increasing as shown in the Graph G52 (the reference revolution NS becomes uniform).

At a time T14, as shown in the Graph G51, the absolute value of the revolution difference $\Delta N$ between the detection revolution Ne and the reference revolution NS is equal to or less than the predetermined threshold value $\Delta Nth$, which starts counting up the timer value TM. It is noted that FIG. 11 shows the revolution that is large by the threshold value $\Delta Nth$ and the revolution that is small by the threshold value $\Delta Nth$ in a thin solid line with the reference revolution NS as a reference. At a time T15, the timer value TM reaches the first period Tth as shown in the Graph G53, which turns on the learning flag as shown in the Graph G54.

Thus, when the state where the absolute value of the difference between the detection revolution Ne and the reference revolution NS is equal to or less than the predetermined threshold value $\Delta Nth$ continues for the predetermined first period Tth or longer, it is determined that the detection revolution Ne has corresponded with the reference revolution NS. Accordingly, it is appropriately determined that the detection revolution Ne corresponds with the reference revolution NS.

Also, only when a state where the variation amount $\Delta Ne$ per unit time $\Delta t$ of the detection revolution Ne is equal to or less than the predetermined threshold value $\Delta Neth$ continues for the predetermined second period or longer, it is determined that the detection revolution Ne corresponds with the reference revolution NS. Accordingly, it is more appropriately determined that the detection revolution Ne corresponds with the reference revolution NS.

In the present embodiment, the case has been described where the learning determination unit 112 determines that the detection revolution Ne corresponds with the reference revolution NS when a state where the absolute value of the revolution difference $\Delta N$ between the detection revolution Ne and the reference revolution NS is equal to or less than the predetermined threshold value $\Delta Nth$ continues for the predetermined first period or longer, and a state where the variation amount $\Delta Ne$ per unit time $\Delta t$ of the detection revolution Ne is equal to or less than the predetermined threshold value $\Delta Neth$ continues for the predetermined second period or longer. However, a mode may be applied that the learning determination unit 112 determines that the detection revolution Ne corresponds with the reference revolution NS by another method. For example, a mode may be applied that, when a state where the absolute value of the revolution difference $\Delta N$ between the detection revolution Ne and the reference revolution NS is equal to or less than the predetermined threshold value $\Delta Nth$ continues for the predetermined first period or longer, the learning determination unit 112 determines that the detection revolution Ne corresponds with the reference revolution NS. In this case, the processing is simplified.

Returning to FIG. 5 again, the functional configuration of the ECU 100 will be described. When the engagement determination unit 111 determines that the clutch stroke St has reached the full engagement point, and only when the learning determination unit 112 determines that the detection revolution Ne corresponds with the reference revolution NS, the learning execution unit 113 re-writes a position in the stroke direction at the full engagement point stored in the full engagement storing unit 108 as a position in the stroke direction at the full engagement point on the torque characteristic curve corrected by the correction unit 109 as a functional unit. Incidentally, the learning execution unit 113 corresponds to a learning execution means described in Claims.

Thus, when it is determined that the clutch stroke St has reached the full engagement point, and only when it is determined that the detection revolution Ne corresponds with the reference revolution NS, a position in the stroke direction at the full engagement point stored in the full engagement storing unit 108 is re-written as a position in the stroke direction at the full engagement point on the torque characteristic curve corrected by the correction unit 109. Accordingly, the position in the stroke direction at the full engagement point on the torque characteristic curve is appropriately learned.

That is, when the clutch stroke St reaches the full engagement point, the clutch 2 is in a coupled state, and the engine revolution Ne corresponds with the input shaft revolution Ni of the transmission 3. Accordingly, when the clutch stroke St has reached the full engagement point, and the detection revolution Ne corresponds with the reference revolution NS, it is assumed that the clutch stroke St has appropriately been corrected. By learning the position in the stroke direction at the full engagement point on the torque characteristic curve to be corrected (herein, by re-writing the position in the stroke direction at the full engagement point stored in the full engagement storing unit 108), the position in the stroke direction at the full engagement point on the torque characteristic curve is appropriately learned.

- Operation of ECU 100 (Flowchart) -

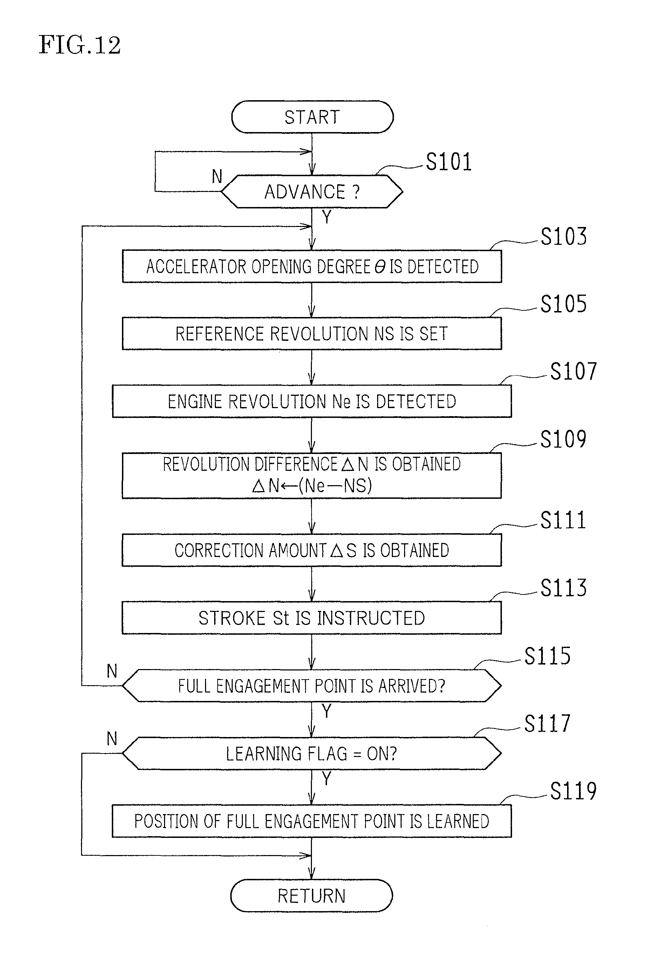

FIG. 12 is a flowchart illustrating an operation of the ECU 100 according to an embodiment of the present invention. First, at step S101, the determination on whether the vehicle starts advancing is carried out by the opening degree detection unit 101. When step S101 is YES, the processing proceeds to step S103. When step S101 is NO, the processing is in a waiting state.

At step S103, the accelerator opening degree $\theta$ is detected by the opening degree detection unit 101. Then, at step S105, a reference revolution NS that is the engine revolution Ne that outputs the engine torque Te required for the vehicle to advance based on the accelerator opening degree $\theta$ detected at step S103 is set by the reference setting unit 103. Next, at step S107, the engine revolution Ne is detected by the revolution detection unit 104.

Then, at step S109, the revolution difference $\Delta N$ that is the subtraction of the reference revolution NS set at step S105 from the detection revolution Ne detected at step S107 is obtained by the correction amount calculation unit 106. Next, at step S111, the correction amount $\Delta S$ of the clutch stroke St is obtained by the correction amount calculation unit 106 based on the revolution difference $\Delta N$ obtained at step S109. Next, at step S113, the position P at the full engagement point on the torque characteristic curve is corrected by the correction unit 109 in the stroke direction, and the clutch stroke St is obtained by the stroke instruction unit 110 based on the torque characteristic curve to be corrected and directed to the automatic clutch 2.

Then, at step S 115, it is determined by the engagement determination unit 111 whether the clutch stroke St reaches the full engagement point. When step S 115 is YES, the processing proceeds to step S117. When step S 115 is NO, the processing is returned to step S 103, and the processing after step S103 is repeatedly executed.

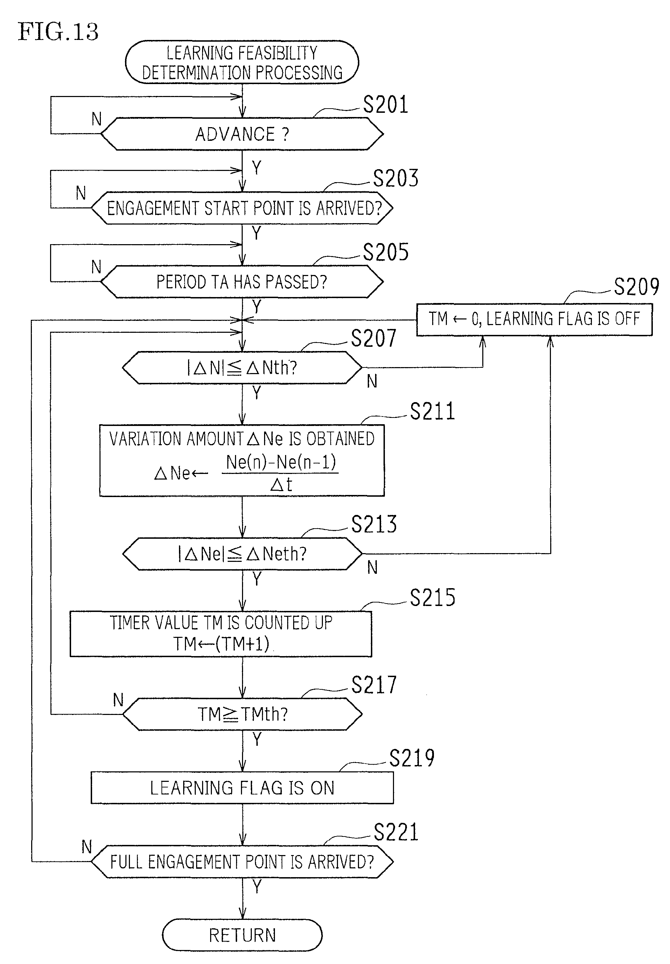

At step S117, it is determined by the learning determination unit 112 whether the detection revolution Ne corresponds with the reference revolution NS (the learning flag is ON). When step S117 is YES, the processing proceeds to step S119. When step S117 is NO, the processing is returned to step S101. It is noted that the processing to determine whether the learning flag is ON (hereinafter referred to as "learning feasibility determination processing") is described later referring to FIG. 13. At step S119, a position in the stroke direction at the full engagement point stored in the full engagement storing unit 108 is re-written by the learning execution unit 113 as a position in the stroke direction at the full engagement point on the torque characteristic curve corrected by the correction unit 109 (that is, the learning of the torque characteristic curve is executed). Then, the processing is returned to step S101.

FIG. 13 is a flowchart illustrating an operation of the learning feasibility determination processing according to an embodiment of the present invention. It is noted that the processing below is parallelly executed with the processing of FIG. 12. Also, for convenience sake, the case where the second period is set as the same period as the first period TMth will be described. First, at step S201, the determination on whether the vehicle starts advancing is carried out by the opening degree detection unit 101. When step S201 is YES, the processing proceeds to step S203. When step S201 is NO, the processing is in a waiting state.

At step S203, it is determined by the learning determination unit 112 whether the clutch stroke St reaches the engagement start point. Incidentally, for example, the determination on whether the clutch stroke St reaches the engagement start point is carried out based on whether the revolution of the input shaft 31 of the transmission 3 (clutch revolution Nc) is equal to or more than a predetermined threshold value (for example, 10 rpm). When step S203 is YES, the processing proceeds to step S205. When step S203 is NO, the processing is in a waiting state.

At step S205, the determination on whether the predetermined period TA (for example, 500 msec) has passed from the time when the clutch stroke St reaches the engagement start point is carried out by the learning determination unit 112. When step S205 is YES, the processing proceeds to step S207. When step S205 is NO, the processing is in a waiting state. At step S207, the determination on whether the absolute value of the revolution difference ΔN obtained at step S109 in the flowchart shown in FIG. 12 is equal to or less than the threshold value ΔNth is carried out by the learning determination unit 112. When step S207 is YES, the processing proceeds to step S211. When step S207 is NO, the processing proceeds to step S209. At step S209, the timer value TM is reset to "0", and the learning flag is initialized to "OFF" by means of the learning determination unit 112, and the processing is returned to step S207. Then, the processing after step S207 is repeatedly executed.

At step S211, the variation amount ΔNe per unit time Δt of the detection revolution Ne is obtained by the learning determination unit 112. Then, at step S213, the determination on whether the absolute value of the variation amount ΔNe obtained at step S211 is equal to less than the threshold value ΔNeth is carried out by the learning determination unit 112. When step S213 is YES, the processing proceeds to step S215. When step S213 is NO, the processing proceeds to step S209.

At step S215, the timer value TM is counted up only by "1" by the learning determination unit 112. Then, at step S217, the determination on whether the timer value TM reaches the first period TMth is carried out by the learning determination unit 112. When step S217 is YES, the processing proceeds to step S219. When step S217 is NO, the processing is returned to step S207, and the processing after step S207 is repeatedly executed.

At step S219, the learning flag is set to "ON" by the learning determination unit 112. Then, at step S221, the determination on whether the clutch stroke St reaches the full engagement point is carried out by the engagement determination unit 111. When step S221 is YES, the processing is returned to step S201. When step S221 is NO, the processing is returned to step S207, and the processing after step S207 is repeatedly executed.

- Operation of ECU 100 (Timing Chart) -

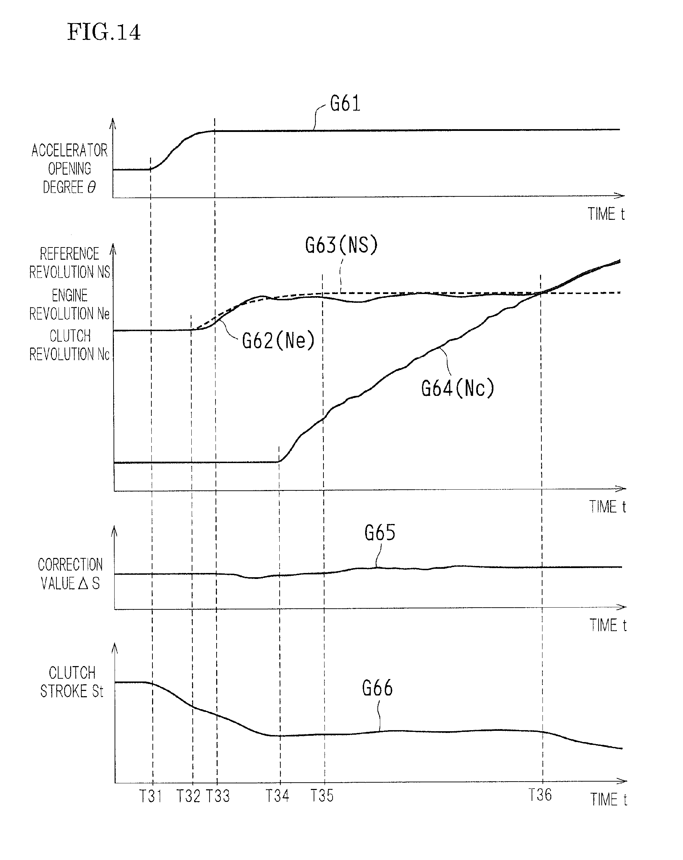

FIG. 14 is a timing chart illustrating an operation of the ECU 100 according to an embodiment of the present invention. In FIG. 14, all the horizontal axes of the graphs represent a time t, and in the order beginning at the top, Graph G61 showing the variation in the accelerator opening degree θ, Graph G62 (solid line) showing the variation in the engine revolution Ne, Graph G63 (dashed line) showing the variation in the reference revolution NS, Graph G64 (solid line) showing the variation in the clutch revolution Nc, Graph G65 showing the variation in the correction value ΔS, and Graph G66 showing the variation in the clutch stroke St are shown.

As shown in the Graph G61, the accelerator opening degree θ starts increasing at a time T31 and is fixed to a uniform value at a time T33. As described above, with respect to the reference revolution NS, the reference revolution NS1 in accordance with the accelerator opening degree θ is read out from the revolution storing unit 102, and "delay processing" in which a time delay is provided and "moderating processing" in which variation is moderated are applied to the reference revolution NS 1 to be read out, so as to set the reference revolution NS. Accordingly, as shown in the Graph G63, the reference revolution NS starts increasing at a time T32 and is fixed to a uniform value at a time T35.

Also, as shown in the Graph G66, the clutch stroke St is generally varied at a uniform speed (herein, decreases) from a time T31 when the accelerator pedal 8 is depressed, and the accelerator opening degree θ starts increasing to a time T34 that is the engagement start point. Then, as shown in the Graph G64, the clutch 2 starts engaging at the time T34 that is the engagement start point, and the clutch revolution Nc starts increasing. At a time T36, the clutch revolution Nc corresponds with the engine revolution Ne, which leads to a full engagement state regarding the clutch 2. When the learning flag is ON, the learning is executed.

-Other Embodiment of Correction Amount Calculation Unit-

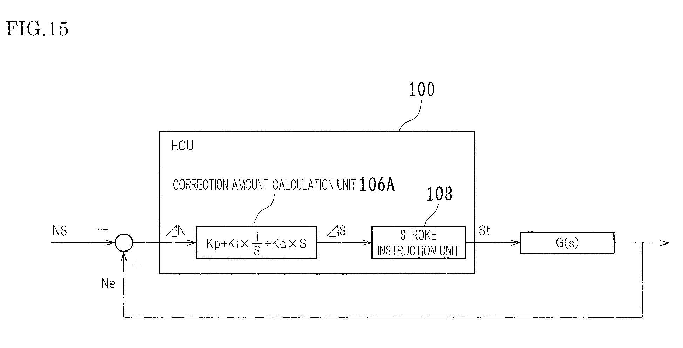

FIG. 15 is a control block diagram illustrating a modification of a correction amount calculation unit according to an embodiment of the present invention. This embodiment is different from the embodiment shown in FIG. 5 because a correction amount calculation unit 106A is provided, instead of the correction amount calculation unit 106 in the functional configuration diagram shown in FIG. 5. The correction amount calculation unit 106A is a PID control system in which the revolution difference ΔN that is the subtraction of the reference revolution NS from the engine revolution Ne is inputted, and the correction amount ΔS of the clutch stroke St is outputted, and its transfer function is defined by the following formula (2).

$$Kp + Ki \times (1 / S) + Kd \times S \qquad (2)$$

Incidentally, each constant Kp, Ki, and Kd with regards to proportional term, integral term, and differential term are set in advance according to a hill climbing method and the like. In the present embodiment, the correction amount calculation unit 106A is provided as the PID control system. Accordingly, the appropriate setting of the constant Kp, Ki, and Kd provide the correction amount ΔS having a more appropriate value.

In addition, in the present embodiment, the case where the control system constituting the correction amount calculation unit 106A is the PID control system including the proportional term, the integral term, and the differential term has been described. However, a mode may be applied that the control system constituting the correction amount calculation unit 106A includes at least two terms out of the proportional term, the integral term, and the differential term. For example, a mode may be applied that the control system constituting the correction amount calculation unit 106A is a PI control system including the proportional term and the integral term.

-Other Embodiment-

In the present embodiment, the case has been described where the opening degree detection unit 101, the revolution storing unit 102, the reference setting unit 103, the revolution detection unit 104, the correction amount storing unit 105, the correction amount calculation unit 106 (or correction amount calculation unit 106A), the torque characteristic storing unit 107, the full engagement storing unit 108, the correction unit 109, the stroke instruction unit 110, the engagement determination unit 111, the learning determination unit 112, and the learning execution unit 113 are functionally constituted in the ECU 100. However, a mode may be applied that at least one unit, out of the opening degree detection unit 101, the revolution storing unit 102, the reference setting unit 103, the revolution detection unit 104, the correction amount storing unit 105, the correction amount calculation unit 106 (or correction amount calculation unit 106A), the torque characteristic storing unit 107, the full engagement storing unit 108, the correction unit 109, the stroke instruction unit 110, the engagement determination unit 111, the learning determination unit 112, and the learning execution unit 113, is realized by hardware such as an electronic circuit.

In the present embodiment, the case has been described where the clutch 20 of the automatic clutch 2 is a dry single plate friction clutch. However, a mode may be applied that the clutch of the automatic clutch 2 is a friction clutch of another type. For example, a mode may be applied that the clutch of the automatic clutch 2 is a dry DCT (Dual Clutch Transmission).

Also, in the present embodiment, the case has been described where the drive source of the automatic clutch 2 is hydraulic. However, a mode may be applied that the drive source of the automatic clutch 2 is a drive source of another type (for example, electric-powered).

Industrial Applicability

The present invention is applied to an automatic clutch control apparatus for an automatic clutch that is configured to alternate between a coupling state and a decoupling state by changing a clutch stroke and transmit a torque between an engine and a transmission in the coupling state, so as to correct a torque characteristic curve showing a relation between the clutch stroke and the clutch torque when a vehicle advances.

Description of the Reference Numeral

| | |
|---|---|
| 1 | Engine |
| 100 | ECU (Automatic clutch control apparatus) |
| 101 | Opening degree detection unit (Part of opening degree detection means) |
| 102 | Revolution storing unit (Revolution storing means) |
| 103 | Reference setting unit (Reference setting means) |
| 104 | Revolution detection unit (Part of revolution detection means) |
| 105 | Correction amount storing unit (Part of correction amount calculation means) |
| 106, 106A | Correction amount calculation unit (Part of correction amount calculation means) |
| 107 | Torque characteristic storing unit |
| 108 | Full engagement storing unit (Full engagement storing means) |
| 109 | Correction unit (Correction means) |
| 110 | Stroke instruction unit |
| 111 | Engagement determination unit (Engagement determination means) |
| 112 | Learning determination unit (Learning determination means) |
| 113 | Learning execution unit (Learning execution means) |
| 2 | Automatic clutch |
| 20 | Clutch |

| 200 | Clutch operation device |
|---|---|
| 3 | Transmission |
| 300 | Shift operation device |
| 401 | Engine revolution sensor (Part of revolution detection means) |
| 402 | Throttle opening degree sensor |
| 403 | Input shaft revolution sensor |
| 404 | Output shaft revolution sensor |
| 405 | Accelerator opening degree sensor (Part of opening degree detection means) |
| 406 | Shift position sensor |
| 407 | Brake pedal sensor |
| 408 | Clutch stroke sensor |
| 409 | Shift select stroke sensor |

**Claims**

1. An automatic clutch control apparatus for an automatic clutch that is configured to alternate between a coupling state and a decoupling state by changing a clutch stroke and transmit a torque between an engine and a transmission in the coupling state, so as to correct a torque characteristic curve showing a relationship between a clutch stroke and the clutch torque when a vehicle advances, the automatic clutch control apparatus comprising:

   an opening degree detection means for detecting at least one out of a throttle opening degree and an accelerator opening degree;
   a reference setting means for setting a reference revolution that is an engine revolution that outputs an engine torque required for the vehicle to advance, based on at least one out of the throttle opening degree and the accelerator opening degree detected by the opening degree detection means;
   a revolution detection means for detecting an engine revolution; and
   a correction means for correcting the clutch stroke instructed to the automatic clutch by correcting the torque characteristic curve in such a manner that a detection revolution that is the engine revolution detected by the revolution detection means is brought close to the reference revolution set by the reference setting means.

2. The automatic clutch control apparatus according to claim 1, wherein the reference setting means sets the engine revolution that outputs the engine torque to accelerate the vehicle at a uniform acceleration corresponding to at least one out of the throttle opening degree and the accelerator opening degree detected by the opening degree detection means as the reference revolution in a period during which the automatic clutch operates from an engagement start point to a full engagement point.

3. The automatic clutch control apparatus according to claim 1 or 2, further comprising a revolution storing means for storing in advance the reference revolution corresponding to at least one out of the throttle opening degree and the accelerator opening degree,
   wherein the revolution setting means sets the reference revolution by reading out, from the revolution storing means, the reference revolution corresponding to at least one out of the throttle opening degree and the accelerator opening degree detected by the opening degree detection means.

4. The automatic clutch control apparatus according to claim 3, wherein the revolution setting means carries out at least one out of delay processing and moderating processing with respect to the reference revolution read out from the revolution storing means so as to set the reference revolution.

5. The automatic clutch control apparatus according to any one of claims 1 to 4, wherein the correction means corrects a position at the full engagement point on the torque characteristic curve in a stroke direction so as to correct the clutch stroke instructed to the automatic clutch.

6. The automatic clutch control apparatus according to claim 5, wherein when the detection revolution is larger than the reference revolution, the correction means corrects the position at the full engagement point on the torque characteristic curve to a side to which the automatic clutch is coupled, and when the detection revolution is smaller than the reference revolution, the correction means corrects the position at the full engagement point on the torque characteristic curve to a side from which the automatic clutch is decoupled.

7. The automatic clutch control apparatus according to claim 5 or 6, further comprising a correction amount calculation means for obtaining a correction amount of the clutch stroke instructed to the automatic clutch based on a difference that is subtraction of the reference revolution from the detection revolution,
wherein the correction means corrects the position at the full engagement point on the torque characteristic curve in a stroke direction only by the correction amount obtained by the correction amount calculation means.

8. The automatic clutch control apparatus according to any one of claims 5 to 7, further comprising:

a full engagement storing means for storing the position in the stroke direction at the full engagement point on the torque characteristic curve;
an engagement determination means for determining whether the clutch stroke reaches the full engagement point;
a learning determination means for determining whether the detection revolution corresponds with the reference revolution; and
a learning execution means for re-writing the position in the stroke direction at the full engagement point stored in the full engagement storing means as the position in the stroke direction at the full engagement point on the torque characteristic curve corrected by the correction means when the engagement determination means determines that the clutch stroke has reached the full engagement point, and only when the learning determination means determines that the detection revolution corresponds with the reference revolution.

9. The automatic clutch control apparatus according to claim 8,
wherein, when an output shaft revolution of the automatic clutch approximately corresponds with the detection revolution, the engagement determination means determines that the clutch stroke has reached the full engagement point.

10. The automatic clutch control apparatus according to claim 8 or 9,
wherein, when a state where an absolute value of a difference between the detection revolution and the reference revolution is equal to or less than a predetermined threshold value continues for a predetermined first period or longer, the learning determination means determines that the detection revolution corresponds with the reference revolution.

11. The automatic clutch control apparatus according to claim 10,
wherein, only when a state where a variation amount per unit time of the detection revolution is equal to or less than a predetermined threshold value continues for a predetermined second period or longer, the learning determination means determines that the detection revolution corresponds with the reference revolution.

FIG.1

FIG.2

FIG.3

300

SELECT DIRECTION

SHIFT DIRECTION

1st    3rd    5th

A1

A0

311

2nd    4th    Rev

312

313

301 SELECT ACTUATOR

302 SHIFT ACTUATOR

303 HYDRAULIC CIRCUIT

FIG.4

FIG.5

| | | |
|---|---|---|
| 401 | ENGINE REVOLUTION SENSOR | |
| 402 | THROTTLE OPENING DEGREE SENSOR | |
| 403 | INPUT SHAFT REVOLUTION SENSOR | |
| 404 | OUTPUT SHAFT REVOLUTION SENSOR | |
| 405 | ACCELERATOR OPENING DEGREE SENSOR | |
| 406 | SHIFT POSITION SENSOR | |
| 407 | BRAKE PEDAL SENSOR | |
| 408 | CLUTCH STROKE SENSOR | |
| 409 | SHIFT SELECT STROKE SENSOR | |

100

101 OPENING DEGREE DETECTION UNIT

102 REVOLUTION STORING UNIT

103 REFERENCE SETTING UNIT

105 CORRECTION AMOUNT STORING UNIT

104 REVOLUTION DETECTION UNIT

106 CORRECTION AMOUNT CALCULATION UNIT

107 TORQUE CHARACTERISTIC STORING UNIT

110 STROKE INSTRUCTION UNIT

109 CORRECTION UNIT

111 ENGAGEMENT DETERMINATION UNIT

108 FULL ENGAGEMENT STORING UNIT

112 LEARNING DETERMINATION UNIT

113 LEARNING EXECUTION UNIT

| | | |
|---|---|---|
| 13 | THROTTLE MOTOR | |
| 200 | CLUTCH OPERATION DEVICE | |
| 300 | SHIFT OPERATION DEVICE | |

FIG.6

REFERENCE
REVOLUTION
NS1

G1

N0

0                                                                 100

ACCELERATOR
OPENING
DEGREE(%)

FIG.7

ENGINE
TORQUE Te

G23

Te3

G22

Te2

G21

Te1

VE

N0      Ne1      Ne2      Ne3

ENGINE
REVOLUTION Ne

FIG.8

CORRECTION
AMOUNT △ S

REVOLUTION
DIFFERENCE △ N

0

G3

**FIG.9**

**FIG.10**

FIG.11

FIG.12

```
                    ┌─────────────┐
                    │    START    │
                    └─────────────┘
                           │
        ┌──────────────────┤
        │      ┌───────────▼──────────┐          S101
        │   N  <      ADVANCE ?       >
        │      └───────────┬──────────┘
        │                Y │
        │  ┌───────────────┼──────────────────┐
        │  │  ┌────────────▼──────────────┐       S103
        │  │  │ ACCELERATOR OPENING DEGREE θ IS DETECTED │
        │  │  └────────────┬──────────────┘
        │  │  ┌────────────▼──────────────┐       S105
        │  │  │ REFERENCE REVOLUTION NS IS SET │
        │  │  └────────────┬──────────────┘
        │  │  ┌────────────▼──────────────┐       S107
        │  │  │ ENGINE REVOLUTION Ne IS DETECTED │
        │  │  └────────────┬──────────────┘
        │  │  ┌────────────▼──────────────┐       S109
        │  │  │ REVOLUTION DIFFERENCE △N IS OBTAINED │
        │  │  │      △N←(Ne−NS)           │
        │  │  └────────────┬──────────────┘
        │  │  ┌────────────▼──────────────┐       S111
        │  │  │ CORRECTION AMOUNT △S IS OBTAINED │
        │  │  └────────────┬──────────────┘
        │  │  ┌────────────▼──────────────┐       S113
        │  │  │ STROKE St IS INSTRUCTED    │
        │  │  └────────────┬──────────────┘
        │  │  ┌────────────▼──────────────┐       S115
        │  └──< FULL ENGAGEMENT POINT IS ARRIVED? >
        │  N   └────────────┬──────────────┘
        │                 Y │
        │     ┌─────────────▼──────────────┐       S117
        └─────< N  LEARNING FLAG = ON?      >
              └─────────────┬──────────────┘
                          Y │
              ┌─────────────▼──────────────┐       S119
              │ POSITION OF FULL ENGAGEMENT POINT IS LEARNED │
              └─────────────┬──────────────┘
                            │
                    ┌───────▼───────┐
                    │    RETURN     │
                    └───────────────┘
```

FIG.13

LEARNING FEASIBILITY
DETERMINATION PROCESSING

S201

ADVANCE ?  — N

↓ Y

S203

ENGAGEMENT START POINT IS ARRIVED? — N

↓ Y

S205

PERIOD TA HAS PASSED? — N

↓ Y

S207

$|\triangle N| \leqq \triangle Nth?$ — N → S209

TM ← 0, LEARNING FLAG IS OFF

↓ Y

S211

VARIATION AMOUNT $\triangle Ne$ IS OBTAINED

$$\triangle Ne \leftarrow \frac{Ne(n)-Ne(n-1)}{\triangle t}$$

S213

$|\triangle Ne| \leqq \triangle Neth?$ — N

↓ Y

S215

TIMER VALUE TM IS COUNTED UP
TM←(TM+1)

S217

TM≧TMth? — N

↓ Y

S219

LEARNING FLAG IS ON

S221

FULL ENGAGEMENT POINT IS ARRIVED? — N

↓ Y

RETURN

FIG.14

G61

ACCELERATOR
OPENING
DEGREE θ

TIME t

REFERENCE
REVOLUTION NS

ENGINE
REVOLUTION Ne

CLUTCH
REVOLUTION Nc

G63(NS)

G62(Ne)

G64(Nc)

TIME t

CORRECTION
VALUE △S

G65

TIME t

CLUTCH
STROKE St

G66

T31  T32 T33      T34   T35                    T36    TIME t

FIG.15

100

ECU

CORRECTION AMOUNT CALCULATION UNIT 106A     108

NS — $\bigcirc$ $\triangle$N $\boxed{Kp + Ki \times \dfrac{1}{S} + Kd \times S}$ $\triangle$S $\boxed{\begin{array}{c}\text{STROKE}\\\text{INSTRUCTION UNIT}\end{array}}$ St $\boxed{G(s)}$

+

Ne

<center>**INTERNATIONAL SEARCH REPORT**</center>

| | International application No. |
|---|---|
| | PCT/JP2011/062949 |

A. CLASSIFICATION OF SUBJECT MATTER
*F16D48/02*(2006.01)i

According to International Patent Classification (IPC) or to both national classification and IPC

B. FIELDS SEARCHED

Minimum documentation searched (classification system followed by classification symbols)
F16D48/02

Documentation searched other than minimum documentation to the extent that such documents are included in the fields searched
Jitsuyo Shinan Koho     1922–1996   Jitsuyo Shinan Toroku Koho   1996–2011
Kokai Jitsuyo Shinan Koho  1971–2011   Toroku Jitsuyo Shinan Koho   1994–2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-139121 A (Mitsubishi Fuso Truck and Bus Corp.),<br>07 June 2007 (07.06.2007),<br>claim 1; fig. 2, 3, 9, 10<br>(Family: none) | 1-7<br>8-11 |
| Y<br>A | JP 63-269739 A (Toyoda Automatic Loom Works, Ltd.),<br>08 November 1988 (08.11.1988),<br>page 2, upper right column, line 5 to lower left column, line 19; fig. 1<br>(Family: none) | 1-7<br>8-11 |
| Y<br>A | JP 2009-1129 A (Toyota Motor Corp.),<br>08 January 2009 (08.01.2009),<br>paragraph [0012]<br>& US 2008/0318727 A1 & DE 102008002563 A1 | 4-7<br>8-11 |

☒ Further documents are listed in the continuation of Box C.      ☐ See patent family annex.

| | |
|---|---|
| *   Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 August, 2011 (03.08.11) | Date of mailing of the international search report<br>16 August, 2011 (16.08.11) |
|---|---|
| Name and mailing address of the ISA/<br>Japanese Patent Office | Authorized officer |
| Facsimile No. | Telephone No. |

Form PCT/ISA/210 (second sheet) (July 2009)

<center>32</center>

**INTERNATIONAL SEARCH REPORT**

| | International application No. |
|---|---|
| | PCT/JP2011/062949 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2011/010547 A1 (Honda Motor Co., Ltd.),<br>27 January 2011 (27.01.2011),<br>paragraph [0091]<br>(Family: none) | 4-7<br>8-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008185217 A